# EUROPEAN PATENT SPECIFICATION

(11) **EP 3 001 008 B1**
(45) Date of publication and mention of the grant of the patent: **02.06.2021**
(21) Application number: 15002620.1
(22) Date of filing: 07.09.2015
(51) Int. Cl.: F02B 19/10, F02B 19/12, F02B 19/18, F02D 41/30, F02P 13/00, F02D 37/02, H01T 13/54

(54) **TURBULENT JET INGNITION PRE-CHAMBER COMBUSTION SYSTEM FOR SPARK IGNITION ENGINES**
VERBRENNUNGSSYSTEM MIT TURBULENZSTRAHLZÜNDUNG-VORKAMMER FÜR FREMDZÜNDUNGSMOTOREN
SYSTÈME DE COMBUSTION AVEC PRÉCHAMBRE D'ALLUMAGE À JET TOURBILLONNAIRE POUR MOTEURS À ALLUMAGE PAR ÉTINCELLE

(30) Priority: 25.09.2014 US 201414496824
(43) Date of publication of application: 30.03.2016
(73) Proprietor: Mahle Powertrain LLC, Farmington Hills, Michigan 48335 (US)
(72) Inventor: Bunce, Michael, Plymouth, MI 48170 (US); Blaxill, Hugh, Novi, MI 48374 (US); Attard, William, Brighton, MI 48116 (US)
(74) Representative: Gleim, Christian Ragnar

(56) References cited:
- WO-A2-2012/091739
- JP-A- 2010 150 983
- US-A- 5 522 357
- US-A1- 2012 103 302
- US-A1- 2014 144 406

## Description

The present invention relates, generally, to an ignition system and, more specifically, to an ignition system for an internal combustion engine having at least one combustion chamber with an injector, ignition device, and a pre-chamber that may be employed to ignite a small charge, which is then used to ignite the main air fuel charge in the main combustion chamber of the internal combustion engine.

Internal combustion engines known in the related art may generally include, among other basic components, an engine block having one or more cylinders, cylinder heads associated with the engine block, and pistons supported for reciprocal movement in each cylinder. The pistons are generally connected to a connecting rod which, in turn, rotates a crankshaft. Generally speaking, fuel is combusted within the cylinders to reciprocate the pistons. The piston drives the connecting rod, which drives a crankshaft, causing it to rotate within the engine block.

In addition to such standard arrangements, it is also known to employ pre-chambers where a small charge of fuel is ignited and then used to ignite the main charge in the main combustion chamber. Over the years, many different pre-chamber designs and arrangements have been proposed in the related art. However, internal combustion engines having pre-chambers have not been widely commercially accepted in the automotive industry, typically because they suffer from higher costs and complexity and sometimes without any significant increase in fuel economy or reduction in pollutants, such that the added cost cannot be justified.

Prior documents US 2014/0 144 406 A1 and US 5,522,357 A show conventional internal combustion engines including a pre-chamber. Moreover, US 2012/0 103 302 A1 shows an ignition system according to the preamble of claim 1 and an internal combustion engine according to the preamble of claim 3.

Thus, there remains a need in the art for an ignition system for an internal combustion engine that improves fuel economy, reduces pollutants generated by the products of combustion, and that is not overly complex and is cost-effective to manufacture. The present invention overcomes the disadvantages in the related art in an ignition system according to claim 1 and an internal combustion engine according to claim 3.

In one embodiment, the turbulent jet ignition pre-chamber combustion system of the present invention employs an orifice diameter that is kept small to promote flame quenching as the combustion products exit out of the pre-chamber into the main combustion chamber. The combustion products then react with the main fuel charge and initiates combustion in the main fuel chamber at multiple locations through chemical, thermal and turbulent effects some distance away from the pre-chamber nozzle. In this way, the ignition system of the present invention is capable of high-drive cycle (part load) fuel economy improvements that can reach up to 30% over baseline conventional spark ignition systems in an optimized engine, as well as high-peak thermal efficiencies (greater than 45%) at wide-open throttle (WOT). These engine performance enhancements are due to a combination of combustion improvements, reduced heat losses, the near elimination of disassociation due to the low combustion temperatures and reduced engine throttling at part-load. Additionally, the ignition system of the present invention facilitates low temperature combustion that is capable of near zero engine-out NOx emissions, while overcoming previous pre-chamber combustion hurdles of reduced peak performance (BMEP) and uncontrollable hydrocarbon (HC) and carbon monoxide (CO) emissions when compared to conventional spark ignition combustion systems. Thus, the ignition system of the present invention can be utilized in engines with existing emission control systems found on conventional passenger vehicles (oxidation and three-way catalyst) to meet current and future emission regulations. Finally, the ignition system of the present invention also provides a "bolt on" fix capable of working with any spark ignition engine (pre- or post-production) with no base engine hardware modification required using carbon-based fuels.

Other objects, features, and advantages of the present invention will be readily appreciated as the same becomes better understood after reading the subsequent description taken in conjunction with the accompanying drawings.
**FIG. 1** is a partial cross-sectional side view of the ignition system of the present invention mounted in an internal combustion engine having at least one combustion chamber formed by a piston disposed in a cylinder and enclosed by a cylinder head;
**FIG. 2** is an enlarged perspective view of the ignition system of the present invention;
**FIG. 3** is an enlarged partial cross-sectional side view of the ignition system of the present invention mounted in an internal combustion engine;
**FIG. 4** is an enlarged partial cross-sectional side view illustrating the injector and ignition device flush mounted in the pre-chamber of the ignition system;
**FIG. 5** is an elevational view of the upper portion of the combustion chamber illustrating the disposition of the ignition system relative to the intake and exhaust ports;
**FIG. 6** is a partial elevational view illustrating the orifices of the pre-chamber nozzle;
**FIG. 7** is a graph illustrating the ignition sequence for the ignition system of the present invention over one complete engine cycle;
**FIG. 8A** is a graph illustrating combustion stability versus exhaust lambda (λ) in a comparison of a spark ignition and turbulent jet ignition system of the present invention;
**FIG. 8B** is a graph illustrating intake manifold absolute pressure as well as pumping mean effective pressure versus exhaust A in a comparison of a spark ignition and turbulent jet ignition system of the present invention;
**FIG. 8C** is a graph of thermal efficiency versus exhaust A in a comparison of a spark ignition and turbulent jet ignition system of the present invention;
**FIG. 8D** is a graph illustrating exhaust port temperature versus exhaust A in a comparison of a spark ignition and turbulent jet ignition system of the present invention;
**FIG. 8E** is a graph illustrating normalized thermal efficiency relative to A equals one (stoichiometric operation) spark ignition versus exhaust A in a comparison of a spark ignition and turbulent jet ignition system of the present invention;
**FIG. 8F** is a graph illustrating engine out NOx emission versus exhaust A in a comparison of a spark ignition and turbulent jet ignition system of the present invention;
**FIG. 8G** is a graph of engine out HC emissions versus exhaust A in a comparison of a spark ignition and turbulent jet ignition system of the present invention;
**FIG. 8H** is a graph illustrating engine out CO emissions versus exhaust A in a comparison of a spark ignition and turbulent jet ignition system of the present invention;
**FIG. 9A** is a graph of crank angles versus exhaust A illustrating the burn angles in a comparison of a spark ignition and turbulent jet ignition system of the present invention;
**FIGS. 9B** **and** **9D** are graphs illustrating 0-10% mass fraction burn versus exhaust A in a comparison of a spark ignition and turbulent jet ignition system of the present invention; and
**FIGS. 9C** **and** **9E** are graphs illustrating 10-90% mass fraction burn versus exhaust A in a comparison of a spark ignition and turbulent jet ignition system of the present invention.

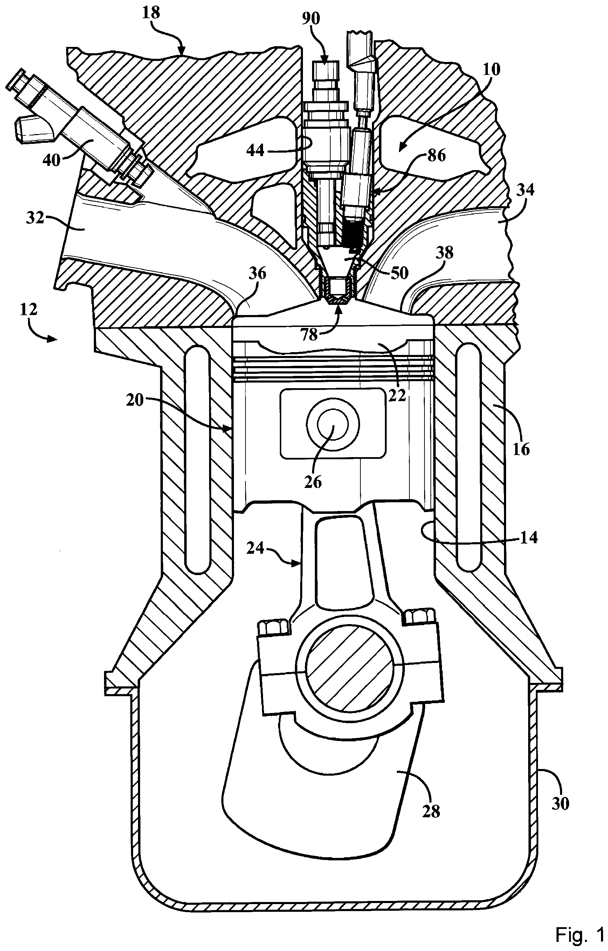

The present invention overcomes the disadvantages in the related art in an ignition system, generally indicated at **10** in **FIGS. 1-6****,** where like numerals are used to designate like structure throughout the drawings. As shown in **FIG. 1****,** the present invention is particularly adapted for use in an internal combustion engine, generally indicated at **12.** In this case, the ignition system **10** of the present invention is illustrated in connection with a single cylinder **14** of an internal combustion engine **12.** Those having ordinary skill in the art will appreciate that the engine **12** illustrated in **FIG. 1** is but one of the many configurations of an internal combustion engine with which the present invention may be employed. By way of example, the present invention may be employed in a two-stroke or four-stroke engine. In addition, the ignition system **10** may also be employed in a multiple-cylinder engine where the cylinders may be arranged in an inline, V-shaped, or flat manner, or any other manner commonly known in the art. The present invention may also be employed with a carburetor or fuel injected internal combustion engine having either port or direct injection of the fuel air charge into the main combustion chamber.

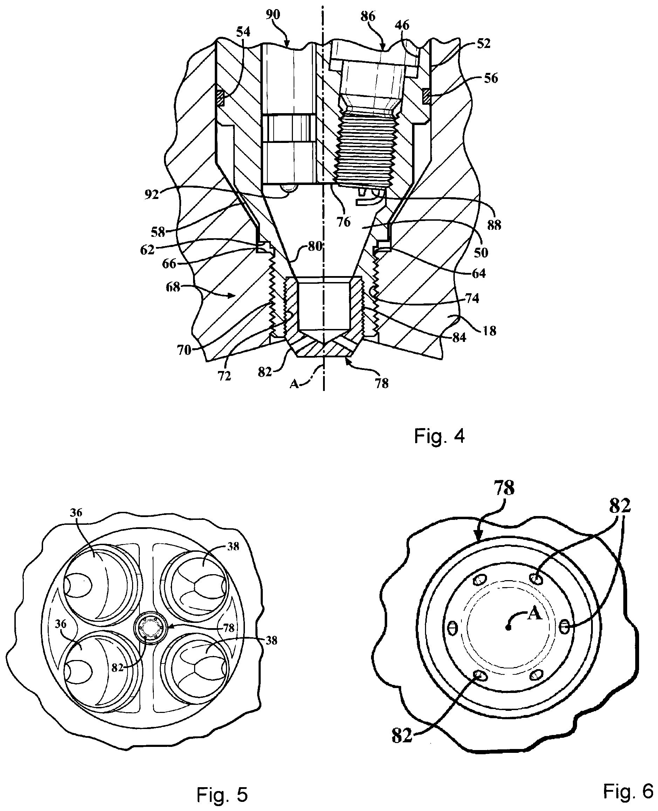

With continuing reference to **FIG. 1****,** the internal combustion engine **12** includes an engine block **16** having one or more cylinders **14,** and a cylinder head, generally indicated at **18,** associated with the engine block **16.** A piston, generally indicated at **20,** is supported for repeated reciprocal movement in the cylinder **14.** Together, the piston **20,** cylinder **14** and cylinder head **18** cooperate to define a combustion chamber **22.** A connecting rod, generally indicated at **24,** is secured to the piston **20** through a piston pin **26.** A crankshaft **28** is associated with the connecting rod **24** and an oil pan **30** is associated with the engine block **16.** The cylinder head **18** defines an intake manifold **32** and an exhaust manifold **34.** At least one intake port **36** is defined in the intake manifold **32** and at least one exhaust port **38** is defined in the exhaust manifold **34.** The intake and exhaust ports **36, 38** are opened and closed via cam driven valves (not shown) to provide fluid communication between the cylinder **14** and the intake manifold **32** and the exhaust manifold **34,** respectively. As illustrated in the view of the upper portion of the combustion chamber shown in **FIG. 5****,** in one embodiment, the internal combustion engine **12** may include two intake ports **36** and two exhaust ports **38.** However, those having ordinary skill in the art will appreciate that the internal combustion engine **10** may include any number of intake and exhaust ports. In addition, and in the embodiment illustrated in **FIG. 1****,** the internal combustion engine **12** also includes a fuel injector **40** mounted in the intake manifold **32** as a means of introducing the main fuel/air charge into the combustion chamber **22** through the intake port **36.** Similarly, products of combustion exit the combustion chamber **22** through the exhaust port **38.** Those having ordinary skill in the art will appreciate that the engine **12** may employ an injector that injects the main fuel charge directly into the combustion chamber **22.** Similarly, the engine **12** may also include a number of other conventional components that are commonly known in the art and will not be described in detail here.

Generally speaking, a fuel/air mixture is introduced into the combustion chamber **22** via the intake port **36.** This constitutes the main fuel charge. The fuel is combusted in the combustion chamber **22** of the cylinder **14** to reciprocate the piston **20,** as will be described in greater detail below. The piston **20** drives the connecting rod **24** which drives the crankshaft **28** causing it to rotate within the engine block **16.** Specifically, the combustion pressure within the cylinder **14** drives the piston **20** downward in a substantially linear motion. On the other hand, movement of the crankshaft **28** drives the connecting rod **24** in a substantially rotational motion. The torque from the crankshaft **28** may be utilized to drive any other component or related systems as is commonly known in the art.

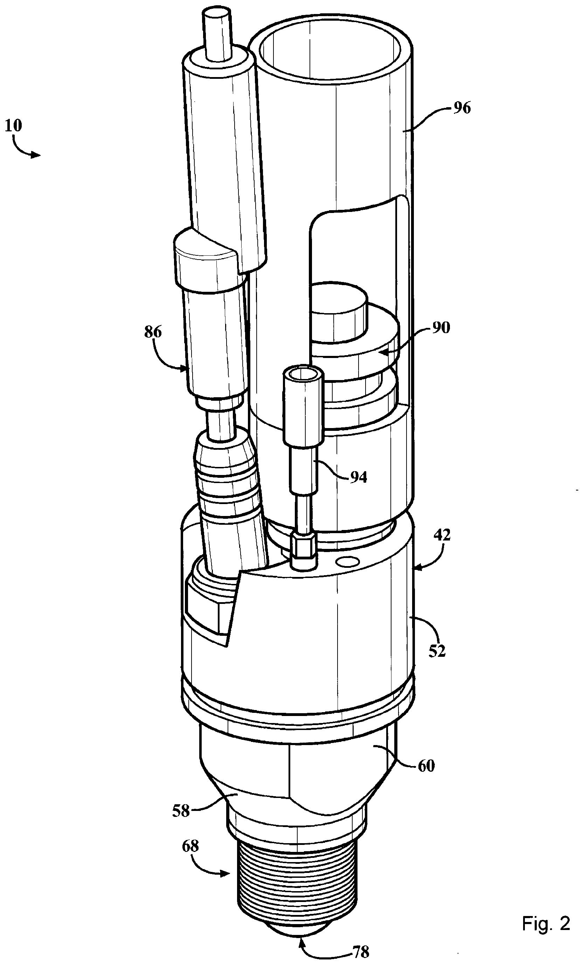

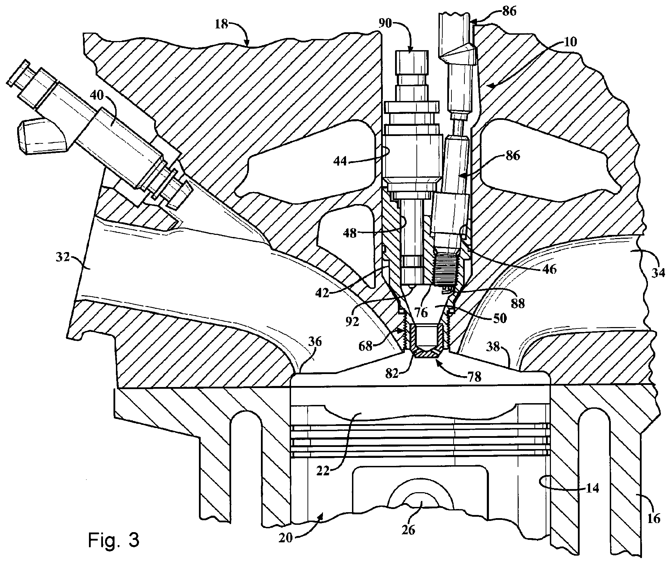

Referring now to **FIGS. 2-6****,** the ignition system **10** of the present invention includes a housing, generally indicated at **42,** that is defined in the cylinder head **18** of the internal combustion engine **12.** In one embodiment, the housing **42** is a separate component that is operatively supported in the cylinder head **18** of the internal combustion engine. However, those having ordinary skill in the art will appreciate that the housing **42** may be essentially defined in and form an integral part of the cylinder head **18.** In any event, and in the embodiment illustrated in these figures, the cylinder head **18** may include a port **44** (**FIG**. **1****)** that receives the housing **42** in a manner such that the housing **42** is sealingly engaged with the cylinder head **18,** as will be described in greater detail below. In addition, and as described in greater detail below, the port **44** may be of the substantial size and location that formerly received a standard sparkplug in an internal combustion engine **12.** This feature facilitates the retrofitting of existing engines with the ignition system **10** of the present invention. As best shown in **FIG. 3****,** the housing **42** defines a sparkplug cavity portion **46,** an injector cavity portion **48,** and a pre-chamber **50.** Each of these components and their interrelationship with other components of the ignition system **10** will be described in greater detail below.

The housing **42** also includes a substantially cylindrical portion **52** having an annular groove **54** disposed about the cylindrical portion **52.** As best shown in **FIG. 4****,** an O-ring seal **56** is operatively received in the groove **54** and adapted for sealing engagement with the cylinder head **18.** In addition, the housing **42** also includes a frustoconically-shaped portion **58** having flats **60** formed thereon (**FIG**. **2****).** The flats **60** cooperate with corresponding surfaces formed on the cylinder head **18** to stabilize and help fix the housing **42** relative to the cylinder head **18** (**FIG**. **4****).** The frustoconically-shaped portion **58** terminates in a shoulder 62 that is juxtaposed to a shoulder **64** defined on the cylinder head **18.** A sealing washer **66** may be employed between these two shoulders **62, 64** to seal the ignition system **10** within the cylinder head **18.** The housing **42** also includes a terminal portion, generally indicated at **68,** that includes external threads **70** and internal threads **72.** The external threads **70** cooperate with threads **74** formed on the cylinder head **18** to mount the housing **42** therein. Those having ordinary skill in the art will appreciate that the ignition system may include any other appropriate seals or fastening mechanisms necessary to securely mount the ignition system in the cylinder head **18.**

The pre-chamber **50** defines a proximal portion **76** and a pre-chamber nozzle, generally indicated at **78,** disposed spaced from the proximal portion **76** of the pre-chamber **50.** As best shown in **FIG. 4****,** the pre-chamber **50** includes frustoconically-shaped sidewalls **80** that extend substantially from the proximal portion **76** to the pre-chamber nozzle **78** and defines a predetermined volume of the pre-chamber. The pre-chamber nozzle **78** defines a longitudinal axis A and includes a plurality of orifices **82** disposed spaced from one another and providing fluid communication between the pre-chamber **50** and the combustion chamber **22.** According to the invention, the orifices **82** have diameters in a range extending between 0.7 mm to 2.0 mm and are disposed about the longitudinal axis A in spaced relation with respect to each other. Moreover, still according to the invention, the ratio of the orifice diameter to the pre-chamber volume is in a range of 0.048 l/cm² to 0.067 l/cm². This ratio provides optimal minimum and maximum proportional component sizing to ensure effective penetration of radical turbulent jets into the main combustion chamber. This effective penetration in turn ensures optimal distribution of the ignition points resulting from the radical turbulent jets in the main combustion chamber thereby producing an effective and optimal combustion event as will be described in greater detail below. The pre-chamber nozzle **78** is substantially cup shaped and includes external threads **84** that cooperate with the internal threads **72** on the terminal portion **68** of the housing **42** to mount the nozzle **78** thereon.

The ignition system **10** also includes an ignition device, generally indicated at **86,** operatively received in the sparkplug cavity portion **46.** The ignition device **86** includes an igniter portion **88** that substantially faces the pre-chamber **50.** Likewise, an injector **90** is operatively received in the injector cavity portion **48.** The injector **90** has a nozzle **92** that substantially faces the pre-chamber **50.** The ignition system **10** also includes a cooling tube **94** (**FIG**. **2****)** that provides fluid communication between a source of cooling fluid and the housing **42.** The cooling fluid may be either air, water, or any other fluid suitable for this purpose. However, those having ordinary skill in the art will appreciate that the cooling tube **94** and the provision for a cooling fluid is optional. In addition, the ignition system **10** of the present invention may also employ a direct-injection installation sleeve **96** (**FIG**. **2****)** that surrounds the injector **90** and stabilizes this component within the port **44** formed in the cylinder head **18.**

The igniter portion **88** of the ignition device **86** and the nozzle **92** of the injector **90** are operatively supported in the proximal portion **76** of the pre-chamber **50** and disposed flush therewith such that the injector **90** delivers a predetermined quantity of fuel into the pre-chamber **50.** The igniter portion **88** ignites the fuel in the pre-chamber **50.** Once ignited, the fuel is forced through the orifices **82** of the pre-chamber nozzle **78** such that the flame is extinguished. Even though extinguished, the products of this pre-chamber combustion are disbursed through the combustion chamber **22** so as to ignite the main fuel charge therein.

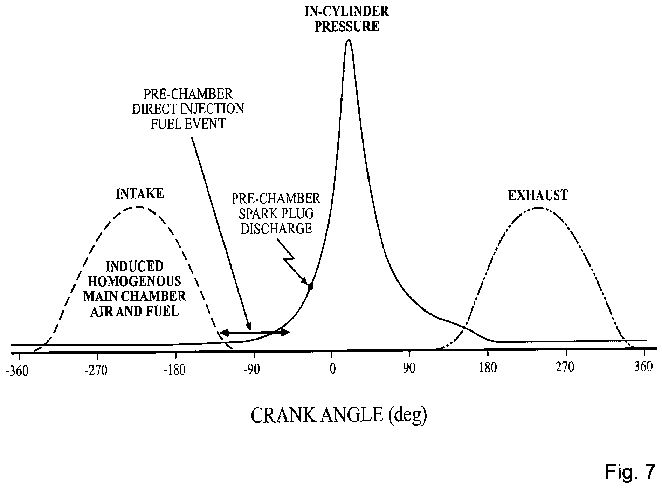

An ignition sequence employing the ignition system **10** of the present invention is illustrated in **FIG. 7****.** The ignition sequence differs from conventional spark ignition fueling strategy in that there is an addition of pre-chamber fuel (approximately 2% of total energy) that is injected into the pre-chamber **50** via the injector **90** and then ignited via the ignition device **86.** The pre-chamber fueling event is timed to end at approximately 50° before spark discharge. This ensures that a rich, plentiful mixture can be contained in the pre-chamber **50** which has been proven to chemically enhance the combustion process through the formation of active radicals.

The net effect of this phenomenon is to create a condition called "turbulent jet ignition." Turbulent jet ignition enables very fast burn rates due to the ignition system **10** producing multiple, distributed ignition sites which consume the main charge rapidly and with minimum combustion variability. The relatively small size of the orifices **82** causes burning mixture to travel quickly through the orifices **82** which, as mentioned above, extinguishes the flame, but seeds the combustion chamber **22** with partially combusted pre-chamber products. The pre-chamber combustion products entrain and ignite the main chamber charge through chemical, thermal, and turbulence effects some distance away from the pre-chamber **50,** thus producing a distributed ignition system.

As noted above, the diameter of the orifices **82** and the ratio of these diameters to the volume of the pre-chamber create a turbulent jet that penetrates deeper into the main charge. To this end, and as a means of avoiding impinging on the combustion chamber wall, in one preferred embodiment, the pre-chamber volume is relatively small. The fast burn rates allow for increased levels of dilution (lean burn and/or exhaust gas recirculation [EGR]) when compared to conventional spark ignition combustion. The high diluent fraction has enabled the ignition system **10** of the present invention to record an 18% improvement in fuel consumption in a non-optimized engine when compared to conventional stoichiometric spark ignition combustion. However, it is projected that the present invention will realize as much as 30% improvement in fuel consumption in an engine that has an optimized combustion chamber. The efficiency improvements are due to a combination of combustion improvements, the near elimination of dissociation due to low combustion temperatures and reduced engine throttling. Additionally, the low temperature combustion has resulted in single digit parts per million (ppm) engine out (NOx) emissions with controllable levels of HC and CO emissions.

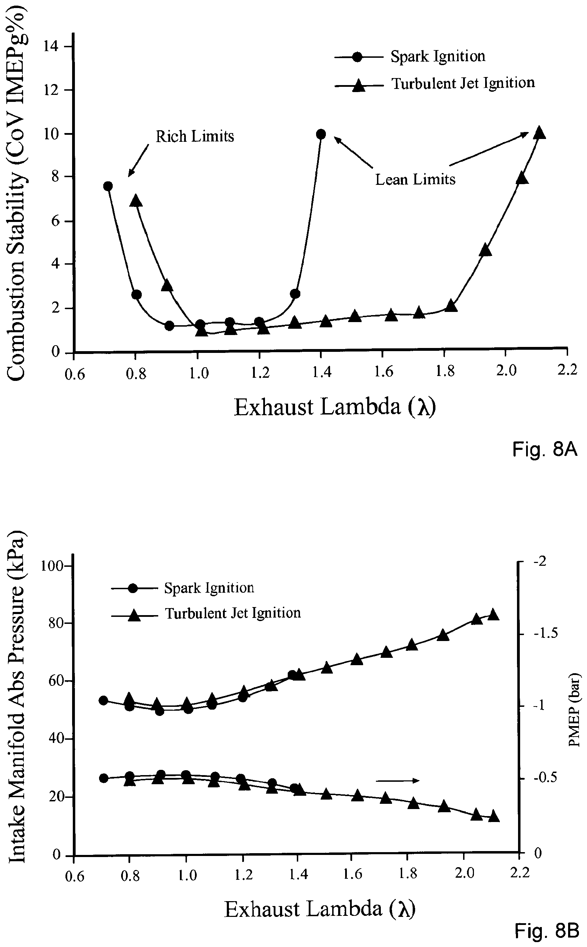

**FIGS. 8A-8H** display relevant data derived from a single cylinder performance of the ignition system of the present invention including efficiency and emission comparisons between the present invention and standard spark ignition engines at fixed speed/load worldwide mapping point of 1.500 rev/min, 3.3 bar indicated net mean effective pressure (IMEPn). The spark ignition tests were conducted with gasoline which was port fuel injected, while the ignition system of the present invention utilized a mixture of approximately 98% gasoline and 2% propane. The gasoline was port fuel injected into the main chamber while the propane was directly injected into the pre-chamber. However, those having ordinary skill in the art will appreciate that any carbon based fuel can be used for the pre-chamber fuel.

More specifically, **FIG. 8A** illustrates a combustion stability comparison up to 10% coefficient of variance in gross IMEP (CoV IMEPg) limit for both rich and lean conditions. The excess air results show that the ignition system of the present invention can operate up to an exhaust A of 2.1 compared to only 1.4 for standard spark ignition systems.

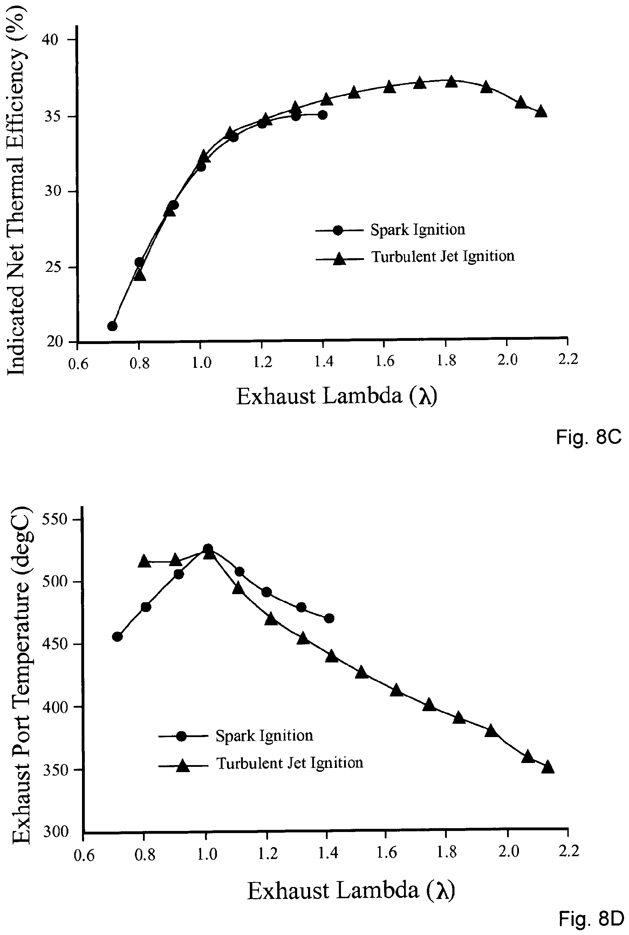

**FIGS. 8B****,** **8C and 8D** illustrate that the lower exhaust temperatures associated with high excess air rates may be near the lower temperature limits needed for efficient HC and CO oxidation. For equivalent exhaust A, the ignition system of the present invention produces exhaust temperatures that are, on average, 20° c to 40° c lower than spark ignition due to improved burn rates which minimize the host lost to the exhaust system. In addition, another major benefit of the ignition system of the present invention when compared to other low temperature combustion systems is that the combustion phasing can be manipulated by altering the pre-chamber spark discharge, thus providing a relatively simple method of combustion control for emissions and fuel economy. In addition, these figures illustrate that the engine dethrottling (increased manifold pressure while maintaining the same load) using the ignition system of the present invention operates at approximately 30 kPa higher MAP for the same load relative to stoichiometric spark ignition. This enables pumping losses to be reduced by approximately 0.3 BAR PMEP.

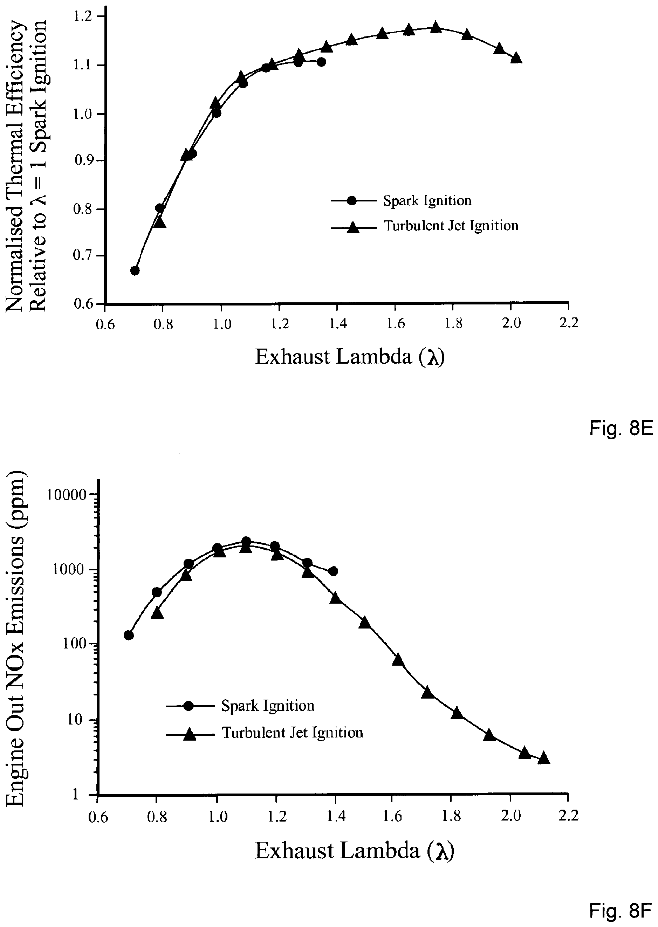

**FIG. 8E** highlights the fact that the ignition system of the present invention, when employed in a single cylinder test facility, was able to produce an 18% fuel economy improvement when compared to stoichiometric spark ignition combustion. As noted above, the efficiency improvements are due to a combination of combustion improvements, the near elimination of dissociation due to the low combustion temperatures, and the reduced engine throttling.

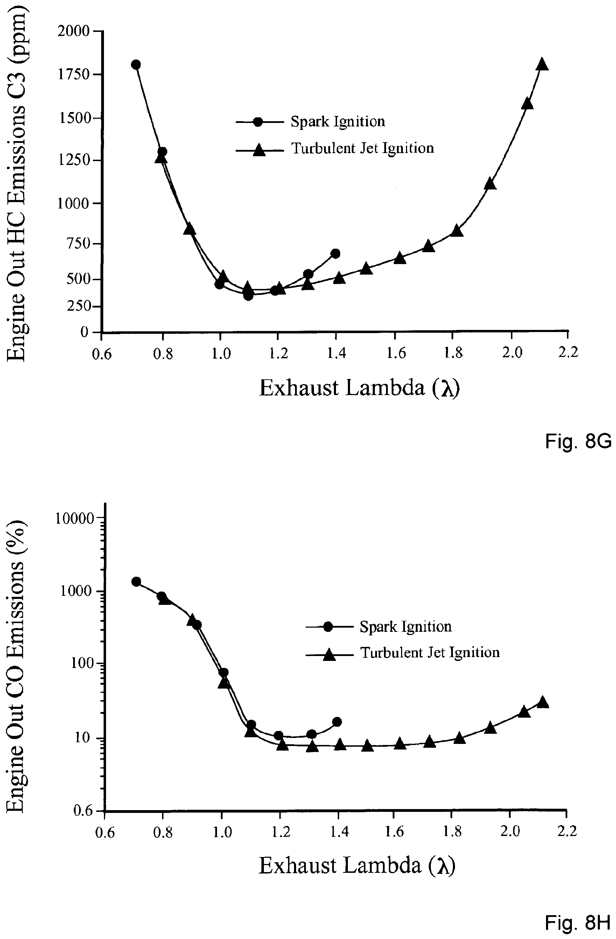

**FIGS. 8F** **and** **8G** illustrate engine out emission comparisons between the engine employing the ignition system of the present invention versus a standard spark ignition engine. As noted above, with the ignition system of the present invention, the internal combustion engine may employ high levels of excess air in the main fuel/air charge. High levels of excess air facilitates very low engine out NOx emissions due to the lower peak combustion temperatures. **FIGS. 8F** **and** **8G** illustrate that when the jet ignition system of the present invention is employed in an internal combustion engine, NOx emissions are reduced to almost zero levels (less than 10 ppm) for exhaust A values greater than 1.8. This benefit associated with the ignition system of the present invention offers unique emission control opportunities and strategies that are not possible with spark ignition lean burn applications. The very low engine out NOx emissions past λ1.8 offer the possibility of eliminating the requirement for lean NOx after treatment for emission control. Rather, with the ignition system of the present invention engine out emissions can be controlled with a conventional three-way catalyst.

**FIGS. 8G and 8H** provide comparisons for HC and CO emissions between the two systems. These two figures highlight the fact that there are significant increases displayed as the rich or lean dilution limit is reached for each combustion system.

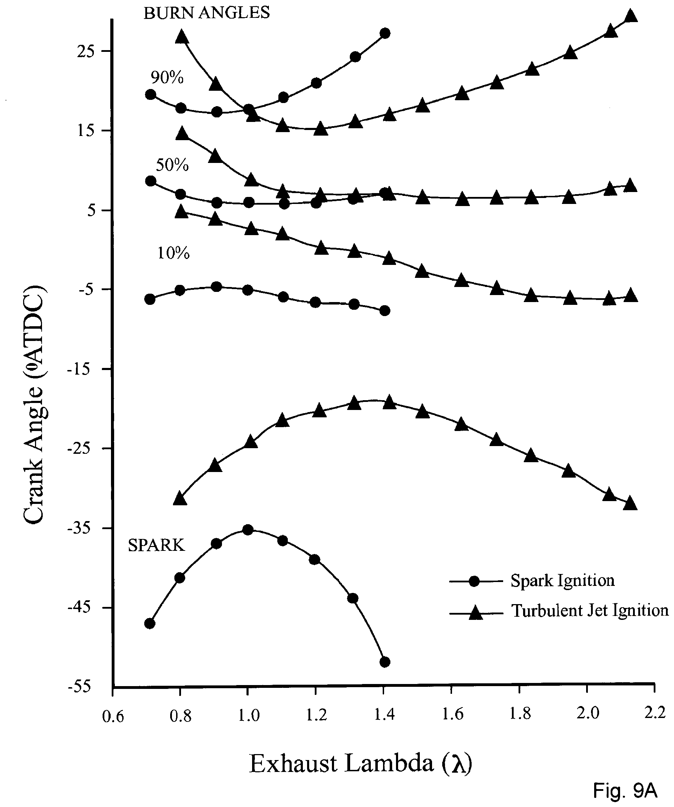

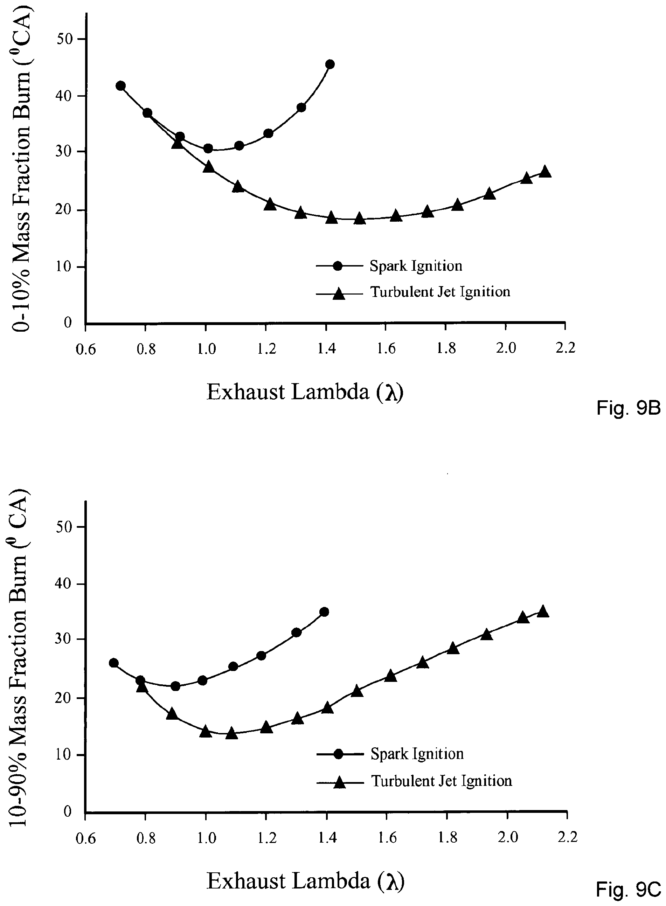

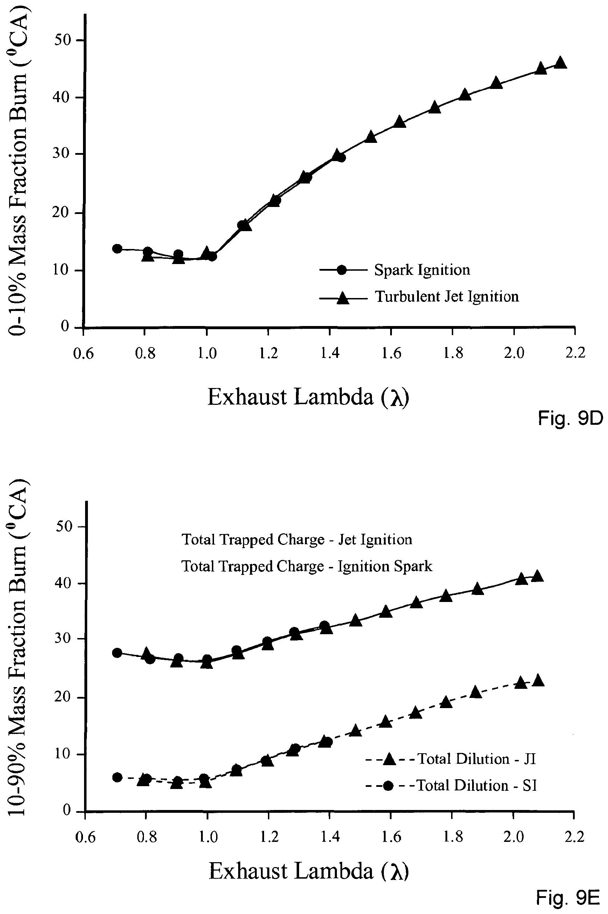

**FIGS. 9A through 9E** illustrate combustion burn comparisons for both spark ignition and an internal combustion engine employing the ignition system of the present invention with increasing dilution levels up to the combustion stability limit of 1,500 rev/min, 3.3 BAR IMEPn. **FIG. 9A** shows the spark discharge at 10%, 50%, and 90% burn angle locations. The burn angle represents the crank angle taken to burn 10-90% of the mass fraction (the fuel charge). **FIGS. 9B** **and** **9D** **and** **FIGS. 9C** **and** **9E** highlight the 0-10% and 10-90% mass fraction burn durations, respectively.

The data related to the burn angles illustrated in **FIGS. 9A** illustrates that the ignition system of the present invention can tolerate considerably higher levels of dilution in the lean region. The distributed ignition caused by the turbulent jets that results from the ignition system of the present invention provides significantly increased burn rates, with faster flame initiation and hence propagation. It is also noted that the optimum 50% burn angle for both spark ignition and the ignition system of the present invention occurs in the 6-8° ATDC CA range across varying excess air dilution, despite a fundamentally different combustion process. Moreover, with the ignition system of the present invention, flame initiation occurs more rapidly than with spark ignition across the entire dilution range.

As best shown in **FIGS. 9B** **and** **9D****,** the excess air turbulent jet ignition 0-10% mass fraction burn results highlight that the flame initiation does not significantly change with increasing A, hovering constantly near 20-25° CA. This is due to the near constant mixture composition in the pre-chamber coupled with the distributed ignition sites provided by the jets and the high levels of chemically active species present in the combusting jets. In the case of an internal combustion engine employing spark ignition, it takes longer to initiate and stabilize the flame kernel after the spark discharge due to the reduced kernel growth associated with the diluted mixture.

The 10-90% mass fraction burn data shown in **FIGS. 9C** **and** **9E** is indicative of the mixture's ability to propagate a flame. These results highlight the fact that in cases, flame propagation slows with increasing dilution due to reduced flame speeds associated with richer or leaner mixtures and lower combustion temperatures. As with the 0-10% burn duration, the 10-90% burn duration is shorter with the ignition system of the present invention than with spark ignition. The effect of the jet is less pronounced during the flame propagation part of the burn process as once the gasoline is ignited in the main chamber, the 10-90% burn data is more an indication of the multiple flame fronts propagating through the main fuel. However, the pre-chamber fuel continues to play a role during the main fuel combustion, as is evident by the shorter burn duration that occurs with the ignition system of the present invention relative to spark ignition. This is due to the enhanced combustion provided by the pre-chamber fuel and the high levels of active radicals produced in the combusting jet being maintained in the propagating flame.

Thus, the ignition system of the present invention achieves significantly improved operating parameters by employing a number of features that facilitate these results. For example, the relatively small pre-chamber volume of less than 2% of the clearance volume minimizes crevice volume, HC emissions, heat loss, surface-to-volume ratio effects and pre-chamber residual gas. The relatively small orifices **82** (having diameters in a range between 0.7 mm to 2.0 mm in size) that provide fluid communication between the pre-chamber **50** and the main combustion chamber **22** allow flame quenching and penetration into the combustion chamber 22. Combusted pre-chamber products (chemical, thermal, and turbulent effects) initiate main chamber combustion in multiple locations. In addition, the separately fueled pre-chamber **50** that employs a flush-mounted electronically controlled direct injector 86 allows a rich mixture to be contained in the pre-chamber 50 while the combustion chamber **22** is heavily diluted with excess air and/or EGR. The location of the injector **86** at the proximal portion **76** of the pre-chamber **50** assists in scavenging the pre-chamber residuals and minimizing crevice volume. Where the internal combustion engine employs a separately fueled combustion chamber 22 using an electronically controlled port fuel injection, for example, or direct injection, the present invention allows homogenous or stratified combustion chamber mixtures and thus HC/NOx emission control. In addition, the spark plug initiated pre-chamber combustion employing a flush mounted ignition device 86 with electronically controlled ignition allows simple combustion phasing control. Moreover, the ignition system 10 of the present invention utilizes commercially available fuel such as gasoline, propane or natural gas, for both the main and pre-chamber combustion cavities.

In this way, the ignition system of the present invention is capable of high-drive cycle (part load) fuel economy improvements that can reach up to 30% over baseline conventional spark ignition systems in an optimized engine, as well as high-peak thermal efficiencies (greater than 45%) at wide-open throttle (WOT). These engine performance enhancements are due to a combination of combustion improvements, reduced heat losses, the near elimination of disassociation due to the low combustion temperatures and reduced engine throttling at part-load. Additionally, the ignition system of the present invention facilitates low temperature combustion that is capable of near zero engine-out NOx emissions, while overcoming previous pre-chamber combustion hurdles of reduced peak performance (BMEP) and uncontrollable hydrocarbon (HC) and carbon monoxide (CO) when compared to conventional spark ignition combustion systems. Thus, the ignition system of the present invention can be utilized in engines with existing emission control systems found on conventional passenger vehicles (oxidation and three-way catalyst) to meet current and future emission regulations. Finally, the ignition system of the present invention also provides a "bolt on" fix capable of working with any spark ignition engine (pre- or post-production) with no base engine hardware modification required.

The present invention has been described in an illustrative manner. It is to be understood that the terminology that has been used is intended to be in the nature of words of description rather than of limitation. Many modifications and variations of the present invention are possible in light of the above teachings. Therefore, the present invention may be practiced other than as specifically described.

## Claims

1. Ignition system (10) for an internal combustion engine (12) having a cylinder head (18) and at least one combustion chamber (22), said ignition system comprising:
a housing (42) defined in the cylinder head (18) of the internal combustion engine (12), said housing (42) defining a pre-chamber (50);
an ignition device (86) supported in said housing (42) and having an igniter portion (88) that substantially faces said pre-chamber (50);
an injector (90) supported in said housing (42) and having a nozzle (92) that substantially faces said pre-chamber (50);
said pre-chamber (50) defining a proximal portion (76) and a pre-chamber nozzle (78) disposed spaced from said proximal portion (76) of said pre-chamber (50), said pre-chamber nozzle (78) including a plurality of orifices (82) disposed spaced from one another and providing fluid communication between said pre-chamber (50) and the combustion chamber (22), and said pre-chamber (50) defining a predetermined volume ;
said igniter portion (88) of said ignition device (86) and said nozzle (92) of said injector (90) being operatively supported in the proximal portion of the pre-chamber (50) such that said injector (90) delivers a predetermined quantity of fuel into said pre-chamber (50), said igniter portion (88) ignites the fuel in said pre-chamber (50) such that the ignited fuel is forced through said orifices of said pre-chamber nozzle (78) and extinguished, but dispersed through the combustion chamber (22) so as to ignite the main fuel charge therein,
**characterised in that**
the orifices (82) have a diameter in a range between 0.7 mm and 2.0 mm, and
the ratio of the orifices (82) diameter to the pre-chamber volume is in a range between 0.048 1/cm² and 0.067 1/cm². therein.

2. Ignition system 10 as set forth in claim 1, wherein said pre-chamber nozzle (78) defines a longitudinal axis A, said orifices (82) disposed about said longitudinal axis A in spaced relation with respect to each other.

3. Internal combustion engine (12) comprising:
an engine block (16) including at least one cylinder (14), a piston (20) supported for repeated reciprocal movement in said cylinder (14), and a cylinder head (18);
said piston (20), cylinder (14) and cylinder head (18) cooperating to define at least one combustion chamber (22);
said cylinder head (18) including at least one intake port (36) through which the main fuel air charge may flow into said combustion chamber (22) and at least one exhaust port (38) through which the products of combustion may exit said combustion chamber (22);
said internal combustion engine (12) further including an ignition system (10), said ignition system (10) including a housing (42) operatively supported in the cylinder head (18) of the internal combustion engine (12), said housing (42) defining a pre-chamber (50);
an ignition device (86) supported in said housing (42) and having an igniter portion (88) that substantially faces said pre-chamber (50);
an injector (90) supported in said housing (42) and having a nozzle (92) that substantially faces said pre-chamber (50);
said pre-chamber (50) defining a proximal portion (76) and a pre-chamber nozzle (78) disposed spaced from said proximal portion (76) of said pre-chamber (50), said pre-chamber nozzle (78) including a plurality of orifices (82) disposed spaced from one another and providing fluid communication between said pre-chamber (50) and the combustion chamber (22), and said pre-chamber (50) defining a predetermined volume ;
said igniter portion (88) of said ignition device (86) and said nozzle (92) of said injector (90) being operatively supported in the proximal portion of the pre-chamber (50) such that said injector (90) delivers a predetermined quantity of fuel into said pre-chamber (50), said igniter portion (88) ignites the fuel in said pre-chamber (50) such that the ignited fuel is forced through said orifices (82) of said pre-chamber nozzle (78) and extinguished, but dispersed through the combustion chamber (22) so as to ignite the main fuel charge therein,
**characterised in that**
the orifices (82) have a diameter in a range between 0.7 mm and 2.0 mm, and
the ratio of the orifices (82) diameter to the pre-chamber volume is in a range between 0.048 1/cm² and 0.067 1/cm².

4. Internal combustion engine (12) as set forth in claim 3, wherein said pre-chamber nozzle (78) defines a longitudinal axis A, said orifices (82) disposed about said longitudinal axis A in spaced relation with respect to each other.

## Patentansprüche

1. Zündsystem (10) für einen Verbrennungsmotor (12), aufweisend einen Zylinderkopf (18) und zumindest einen Brennraum (22), wobei das Zündsystem umfasst:
ein Gehäuse (42), das in dem Zylinderkopf (18) des Verbrennungsmotors (12) definiert ist, wobei das Gehäuse (42) eine Vorkammer (50) definiert;
eine Zündvorrichtung (86), die in dem Gehäuse (42) gelagert ist und einen Zünderabschnitt (88) aufweist, der der Vorkammer (50) im Wesentlichen zugewandt ist;
ein Einspritzventil (90), das in dem Gehäuse (42) gelagert ist und eine Düse (92) aufweist, die der Vorkammer (50) im Wesentlichen zugewandt ist;
wobei die Vorkammer (50) einen proximalen Abschnitt (76) und eine Vorkammerdüse (78) definiert, die in einem Abstand von dem proximalen Abschnitt (76) der Vorkammer (50) angeordnet ist, wobei die Vorkammerdüse (78) eine Vielzahl von Öffnungen (82) aufweist, die in einem Abstand voneinander angeordnet sind und Fluidkommunikation zwischen der Vorkammer (50) und dem Brennraum (22) bereitstellen, und wobei die Vorkammer (50) ein vorherbestimmtes Volumen definiert,
wobei der Zünderabschnitt (88) der Zündvorrichtung (86) und die Düse (92) des Einspritzventils (90) in dem proximalen Abschnitt der Vorkammer (50) funktional gelagert sind, so dass das Einspritzventil (90) eine vorherbestimmte Menge an Kraftstoff in die Vorkammer (50) abgibt, der Zünderabschnitt (88) den Kraftstoff in der Vorkammer (50) zündet, so dass der gezündete Kraftstoff durch die Öffnungen der Vorkammerdüse (78) gezwungen und gelöscht, aber durch den Brennraum (22) hindurch verteilt wird, um die Hauptkraftstoffladung darin zu zünden,
**dadurch gekennzeichnet, dass**
die Öffnungen (82) einen Durchmesser in einem Bereich zwischen 0,7 mm und 2,0 mm aufweisen, und
das Verhältnis des Durchmessers der Öffnungen (82) zu dem Vorkammervolumen in einem Bereich zwischen 0,048 1/cm² und 0,067 1/cm² liegt.

2. Zündsystem (10) nach Anspruch 1, wobei die Vorkammerdüse (78) eine Längsachse A definiert, wobei die Öffnungen (82) um die Längsachse A in einer Abstandsbeziehung zueinander angeordnet sind.

3. Verbrennungsmotor (12), umfassend:
einen Motorblock (16), aufweisend zumindest einen Zylinder (14), einen Kolben (20), der für eine wiederholte Hin- und Herbewegung in dem Zylinder (14) gelagert ist, und einen Zylinderkopf (18);
wobei der Kolben (20), der Zylinder (14) und der Zylinderkopf (18) zusammenwirken, um zumindest einen Brennraum (22) zu definieren;
wobei der Zylinderkopf (18) zumindest einen Einlasskanal (36), durch den die Hauptkraftstoff-Luft-Ladung in den Brennraum (22) strömen kann, und zumindest einen Auslasskanal (38), durch den die Verbrennungsprodukte den Brennraum (22) verlassen können, aufweist;
wobei der Verbrennungsmotor (12) ferner ein Zündsystem (10) aufweist, wobei das Zündsystem (10) ein Gehäuse (42) aufweist, das in dem Zylinderkopf (18) des Verbrennungsmotors (12) funktional gelagert ist, wobei das Gehäuse (42) eine Vorkammer (50) definiert;
eine Zündvorrichtung (86), die in dem Gehäuse (42) gelagert ist und einen Zünderabschnitt (88) aufweist, der der Vorkammer (50) im Wesentlichen zugewandt ist;
ein Einspritzventil (90), das in dem Gehäuse (42) gelagert ist und eine Düse (92) aufweist, die der Vorkammer (50) im Wesentlichen zugewandt ist;
wobei die Vorkammer (50) einen proximalen Abschnitt (76) und eine Vorkammerdüse (78) definiert, die in einem Abstand von dem proximalen Abschnitt (76) der Vorkammer (50) angeordnet ist, wobei die Vorkammerdüse (78) eine Vielzahl von Öffnungen (82) aufweist, die in einem Abstand voneinander angeordnet sind und Fluidkommunikation zwischen der Vorkammer (50) und dem Brennraum (22) bereitstellen, und die Vorkammer (50) ein vorherbestimmtes Volumen definiert;
wobei der Zünderabschnitt (88) der Zündvorrichtung (86) und die Düse (92) des Einspritzventils (90) in dem proximalen Abschnitt der Vorkammer (50) funktional gelagert sind, so dass das Einspritzventil (90) eine vorherbestimmte Menge an Kraftstoff in die Vorkammer (50) abgibt, der Zünderabschnitt (88) den Kraftstoff in der Vorkammer (50) zündet, so dass der gezündete Kraftstoff durch die Öffnungen (82) der Vorkammerdüse (78) gezwungen und gelöscht, aber durch den Brennraum (22) hindurch verteilt wird, um die Hauptkraftstoffladung darin zu zünden,
**dadurch gekennzeichnet, dass**
die Öffnungen (82) einen Durchmesser in einem Bereich zwischen 0,7 mm und 2,0 mm aufweisen, und
das Verhältnis des Durchmessers der Öffnungen (82) zu dem Vorkammervolumen in einem Bereich zwischen 0,048 1/cm² und 0,067 1/cm² liegt.

4. Verbrennungsmotor (12) nach Anspruch 3, wobei die Vorkammerdüse (78) eine Längsachse A definiert, wobei die Öffnungen (82) um die Längsachse A in einer Abstandsbeziehung zueinander angeordnet sind.

## Revendications

1. Système d'allumage (10) pour un moteur à combustion interne (12) ayant une culasse (18) et au moins une chambre de combustion (22), ledit système d'allumage comprenant :
un boîtier (42) défini dans la culasse (18) du moteur à combustion interne (12), ledit boîtier (42) définissant une préchambre (50) ;
un dispositif d'allumage (86) supporté dans ledit boîtier (42) et ayant une partie d'allumeur (88) faisant sensiblement face à ladite préchambre (50) ;
un injecteur (90) supporté dans ledit boîtier (42) et ayant une buse (92) faisant sensiblement face à ladite préchambre (50) ;
ladite préchambre (50) définissant une partie proximale (76) et une buse de préchambre (78) située à une distance de ladite partie proximale (76) de ladite préchambre (50), ladite buse de préchambre (78) ayant une pluralité d'orifices (82) espacés les uns des autres et fournissant une communication fluidique entre ladite préchambre (50) et ladite chambre de combustion (22), et ladite préchambre (50) définissant un volume prédéterminé ;
ladite partie d'allumeur (88) dudit dispositif d'allumage (86) et ladite buse (92) dudit injecteur (90) étant supportées de manière opérationnelle dans la partie proximale de la préchambre (50) de sorte que ledit injecteur (90) délivre une quantité prédéterminée de carburant dans ladite préchambre (50), ladite partie d'allumeur (88) allume le combustible dans ladite préchambre (50) de sorte que le combustible allumé est forcé à travers lesdits orifices de ladite buse de préchambre (78) et éteint mais distribué à travers la chambre de combustion (22) pour allumer la charge principale de combustible dans celle-ci,
**caractérisé en ce que**
les orifices (82) ont un diamètre compris entre 0,7 mm et 2,0 mm, et
le rapport entre le diamètre des orifices (82) et le volume de la préchambre est compris entre 0,048 1/cm² et 0,067 1/cm².

2. Système d'allumage (10) selon la revendication 1, dans lequel ladite buse de préchambre (78) définit un axe longitudinal A, lesdits orifices (82) étant disposés autour dudit axe longitudinal A dans une relation espacée.

3. Moteur à combustion interne (12) comprenant :
un bloc moteur (16) ayant au moins un cylindre (14), un piston (20) supporté pour un mouvement de va-et-vient répété dans ledit cylindre (14), et une culasse (18) ;
ledit piston (20), ledit cylindre (14) et ladite culasse (18) coopérant pour définir au moins une chambre de combustion (22) ;
ladite culasse (18) ayant au moins un port d'entrée (36) à travers lequel la charge principale de carburant et d'air peut s'écouler dans la chambre de combustion (22) et au moins un port d'échappement (38) à travers lequel les produits de combustion peuvent sortir de ladite chambre de combustion (22) ;
ledit moteur à combustion interne (12) comprenant en outre un système d'allumage (10), ledit système d'allumage (10) comprenant un boîtier (42) supporté de manière opérationnelle à l'intérieur de ladite culasse (18) dudit moteur à combustion interne (12), ledit boîtier (42) définissant une préchambre (50) ;
un dispositif d'allumage (86) supporté dans ledit boîtier (42) et ayant une partie d'allumeur (88) faisant sensiblement face à ladite préchambre (50) ;
un injecteur (90) supporté dans ledit boîtier (42) et ayant une buse (92) faisant sensiblement face à ladite préchambre (50) ;
ladite préchambre (50) définissant une partie proximale (76) et une buse de préchambre (78) située à une distance de ladite partie proximale (76) de ladite préchambre (50), ladite buse de préchambre (78) ayant une pluralité d'orifices (82) espacés les uns des autres et fournissant une communication fluidique entre ladite préchambre (50) et la chambre de combustion (22), et ladite préchambre (50) définissant un volume prédéterminé ;
ladite partie d'allumeur (88) dudit dispositif d'allumage (86) et ladite buse (92) dudit injecteur (90) étant supportées de manière opérationnelle dans la partie proximale de ladite préchambre (50) de sorte que ledit injecteur (90) délivre une quantité prédéterminée de carburant dans ladite préchambre (50), ladite partie d'allumeur (88) allume le combustible dans ladite préchambre (50) de sorte que le combustible allumé est forcé à travers lesdits orifices (82) de ladite buse de préchambre (78) et éteint mais distribué à travers la chambre de combustion (22) pour allumer la charge principale de combustible dans celle-ci,
**caractérisé en ce que**
les orifices (82) ont un diamètre compris entre 0,7 mm et 2,0 mm, et
le rapport entre le diamètre des orifices (82) et le volume de la préchambre est compris entre 0,048 1/cm² et 0,067 1/cm².

4. Moteur à combustion interne (12) selon la revendication 3, dans lequel ladite buse de préchambre (78) définit un axe longitudinal A, lesdits orifices (82) étant disposés autour dudit axe longitudinal A dans une relation espacée.
